# EUROPÄISCHE PATENTANMELDUNG

(11) **EP 1 914 647 A1**
(43) Veröffentlichungstag der Anmeldung: **23.04.2008**
(21) Anmeldenummer: 06022021.7
(22) Anmeldetag: 20.10.2006
(51) Int. Cl.: G06F 17/50

(54) **Verfahren zur Planung, Errichtung und zum Betrieb eines Bauwerkes**

(71) Anmelder: Hochtief Aktiengesellschaft, 45128 Essen (DE)
(72) Erfinder: Bürklin, Bernhard Prof. Dr.- Ing., 45239 Essen (DE)
(74) Vertreter: Rohmann, Michael

(57) **Zusammenfassung**

Verfahren zur Planung, Errichtung und zum Betrieb eines Bauwerkes, wobei im Zuge der Planung des Bauwerkes mittels geometrischer Daten ein dreidimensionales Modell des Bauwerkes mit zumindest einem Rechner erstellt wird. Außerdem werden dem Bauwerk zugeordnete Zusatzdaten in dem Rechner abgespeichert. Anschließend wird das Bauwerk aus Baumaterialien errichtet. Während der Errichtungsphase werden Soll-Zustände der Errichtungsphase anhand des 4D-Modells mit Ist-Zuständen der Errichtungsphase verglichen und die Daten werden entsprechend aktualisiert. Nach Abschluss der Errichtungsphase erfolgt der Betrieb des Bauwerkes unterstützt durch die aktualisierten Daten und das 4D-Modell.

## Beschreibung

Die Erfindung betrifft ein Verfahren zur Planung, Errichtung und zum Betrieb eines Bauwerkes. Bauwerk meint im Rahmen der Erfindung insbesondere ein Gebäude.

Aus der Praxis sind verschiedene Verfahren zur Planung von Bauwerken, zur Errichtung von Bauwerken und auch zum Betrieb von Bauwerken bekannt. Allerdings ist bei diesen bekannten Maßnahmen die Koordination bzw. Abstimmung zwischen Planung, Errichtung und Betrieb nicht zufrieden stellend. Eine gewisse Koordination zwischen Planung und Errichtung eines Bauwerkes ist selbstverständlich stets erforderlich. Jedoch werden bei den bekannten Maßnahmen Widersprüche zwischen dem geplanten Bauwerk und dem tatsächlich errichteten Bauwerk häufig erst relativ spät erkannt. Das führt zu Zwängen und oftmals leidet die Qualität des Bauwerkes unter dieser mangelnden Koordination. Eine halbwegs zufrieden stellende Koordination zwischen der Planung, der Errichtung und dem Betreiben eines Bauwerkes gibt es bislang nicht.

Der Erfindung liegt das technische Problem zugrunde, ein Verfahren der eingangs genannten Art anzugeben, bei dem eine effektive Koordination bzw. Abstimmung zwischen Planung und Errichtung und Betrieb des Bauwerkes möglich ist.

Zur Lösung dieses technischen Problems lehrt die Erfindung ein Verfahren zur Planung, Errichtung und zum Betrieb eines Bauwerkes,
wobei im Zuge der Planung des Bauwerkes mittels geometrischer Daten ein dreidimensionales Modell (3D-Modell) des Bauwerkes mit zumindest einem Rechner erstellt wird, welches 3D-Modell über zumindest eine Anzeigeeinrichtung visualisierbar ist,
wobei außerdem dem Bauwerk zugeordnete Zusatzdaten in dem Rechner abgespeichert werden (4D-Modell),
wobei anschließend das Bauwerk aus Baumaterialien errichtet wird,
wobei während der Errichtungsphase Soll-Zustände der Errichtungsphase anhand des 3D- bzw. 4D-Modells mit Ist-Zuständen der Errichtungsphase verglichen werden und die Daten, insbesondere die Zusatzdaten, entsprechend den Unterschieden zwischen Soll- und Ist-Zuständen aktualisiert werden
und wobei nach Abschluss der Errichtungsphase der Betrieb des Bauwerkes mit Unterstützung der aktualisierten Daten und des 4D-Modells erfolgt.

Betrieb des Bauwerkes meint insbesondere die Wartung und/oder die Instandhaltung und/oder die Reinigung und/oder die Energieversorgung des Bauwerkes. Es liegt somit im Rahmen der Erfindung, dass die Wartung und/oder die Instandhaltung und/oder die Reinigung und/oder die Energieversorgung des Bauwerkes unterstützt durch die aktualisierten Daten und das 4D-Modell durchgeführt wird. Instandhaltung des Bauwerkes umfasst insbesondere auch Reparaturarbeiten an dem Bauwerk. Energieversorgung meint insbesondere die Beheizung des Bauwerkes. Zum Betrieb des Bauwerkes gehört beispielsweise auch die Versorgung des Bauwerkes mit fluiden Medien, d.h. insbesondere mit Wasser und/ oder Gas. Es liegt auch im Rahmen der Erfindung, dass die Versorgung des Bauwerkes mit fluiden Medien unterstützt durch die aktualisierten Daten und das 4D-Modell durchgeführt wird.

Im Rahmen des erfindungsgemäßen Verfahrens werden während der Planungsphase zunächst die geometrischen Daten des geplanten Bauwerkes in einen Rechner eingegeben und abgespeichert. Die entsprechenden Eingabedaten resultieren in der Regel aus existierenden 2D-Plänen und/oder 3D-Plänen oder -Beschreibungen. Die Erstellung des 3D-Modells aus den geometrischen Daten erfolgt zweckmäßigerweise mit handelsüblicher Software. Das 3D-Modell wird abgespeichert und ist jederzeit über eine Anzeigeeinrichtung, d.h. beispielsweise über einen Bildschirm, einen Flachbildschirm oder ein spezielles Anzeigebord, visualisierbar bzw. anzeigbar. Es liegt im Rahmen der Erfindung, dass verschiedene Bauphasen als 3D-Modell visualisierbar sind. Zweckmäßigerweise kann kontinuierlich jede Bauphase als 3D-Modell sichtbar gemacht werden.

Erfindungsgemäß werden zusätzlich zu dem 3D-Modell bzw. zusätzlich zu den Daten des 3D-Modells dem Bauwerk zugeordnete Zusatzdaten in den Rechner eingegeben und abgespeichert. Die dem Bauwerk zugeordneten Zusatzdaten entsprechen vorzugsweise den Baumaterialkosten und/oder den Baumaterialeigenschaften und/oder den zeitlichen Errichtungsdaten und/oder den Bauwerksteil-Kosten und/oder den Bauwerkseigenschaften und/oder den zeitlichen Betriebsdaten und/oder den leistungsbezogenen Betriebsdaten. Zeitliche Errichtungsdaten meint insbesondere die Termine für die Errichtung von Bauwerksteilen bzw. Bauwerksabschnitten und/oder die zeitlichen Beziehungen zwischen dem Errichten einzelner Bauwerksteile bzw. Bauwerksabschnitte. Bauwerksteil-Kosten meint die Errichtungskosten für die einzelnen Bauwerksteile/Bauwerksabschnitte. Unter Bauwerkseigenschaften fällt beispielsweise die Nutzungsart des Bauwerkes. Mit zeitlichen Betriebsdaten sind insbesondere Wartungsintervalle und/oder Instandhaltungsintervalle und/oder Reinigungsintervalle gemeint. Diese zeitlichen Betriebsdaten können sich auf einzelne Bauwerksteile bzw. Bauwerksabschnitte beziehen. Leistungsbezogene Betriebsdaten meint vor allem den Umfang, insbesondere den Kostenumfang, der Wartung und/oder der Instandhaltung und/oder der Reinigung und/oder der Energieversorgung des Bauwerkes bzw. von Bauwerksabschnitten.

Erfindungsgemäß wird aus dem 3D-Modell und den dem Bauwerk zugeordneten Zusatzdaten das sogenannte vierdimensionale Modell (4D-Modell) erstellt. D.h. die geometrischen Daten des 3D-Modells und die Zusatzdaten werden gemeinsam für das betreffende Bauwerk als sogenanntes 4D-Modell abgespeichert, zweckmäßigerweise in einer Datenbank. Es liegt im Rahmen der Erfindung, dass das 3D-Modell mit den Zusatzdaten bzw. das 4D-Modell jederzeit visualisierbar ist. Die Visualisierung kann also jederzeit in der Planungsphase, in der Errichtungsphase oder in der Betriebsphase erfolgen. Dabei können sowohl der momentane Zustand des Bauwerkes als auch Bauwerkszustände zu anderen Zeitpunkten visualisiert werden. Wesentlich ist insbesondere, dass mit dem 4D-Modell eine Simulation nicht nur der Errichtung, sondern auch des Betriebs des Bauwerkes erzeugt werden kann. Einzelne Errichtungsphasen und Betriebsphasen können somit visualisiert werden. Vorzugsweise kann die Visualisierung des 4D-Modells an einer Mehrzahl von Rechnern an verschiedenen Orten erfolgen. Grundsätzlich kann zur Erstellung des 4D-Modells mit handelsüblichen Software-Komponenten gearbeitet werden. Es liegt im Rahmen der Erfindung, dass das erfindungsgemäße Verfahren problemlos mit beliebigen Datenformaten bzw. Datenmodellen arbeiten kann.

Das erfindungsgemäße 4D-Modell kann für vielfältige Aufgaben bei der Errichtung und beim Betrieb eines Bauwerkes genutzt werden. Grundsätzlich kann der Einsatz des 4D-Modells über den gesamten Lebenszyklus eines Bauwerkes erfolgen. Ein besonderer Vorteil des erfindungsgemäßen Verfahrens liegt darin, dass das 4D-Modell bzw. die Daten des 4D-Modells bei einer Vielzahl von Ermittlungen, Kalkulationen, Analysen und Planungen wiederverwertet werden können. Das erfindungsgemäße Verfahren erlaubt eine einfache und effektive Koordination, Kombination und Abstimmung von Planung und den verschiedenen Bau- bzw. Errichtungsphasen sowie den Betriebsabläufen nach Errichtung des Bauwerkes. Im Vergleich zu den bislang bekannten Maßnahmen erlaubt das erfindungsgemäße Verfahren eine beachtliche Einsparung von Zeit und Kosten. Außerdem wird eine verbesserte Planungsqualität und daraus resultierend ein verbessertes Bauwerk bzw. eine verbesserte Qualität des Bauwerkes erzielt. Abläufe für den Betrieb des Bauwerkes können frühzeitig effektiv und wirtschaftlich vorgegeben werden. - Es liegt im Übrigen im Rahmen der Erfindung, dass eine regelmäßige Aktualisierung des 4D-Modells bzw. der Daten des 4D-Modells erfolgt.

Nach einer besonders bevorzugten Ausführungsform der Erfindung werden mit dem 4D-Modell die für die Errichtung des Bauwerkes erforderlichen Mengen an Baumaterial ermittelt, wobei diese ermittelten Mengen Baumaterial beschafft werden und die Errichtung des Bauwerkes wird damit durchgeführt (Mengenermittlung). Es liegt weiterhin im Rahmen der Erfindung, dass mit dem 4D-Modell die für die Errichtung des Bauwerkes erforderliche Menge an Arbeitskräften ermittelt wird sowie die Menge an erforderlicher Energie. Bei der Mengenermittlung kann das für verschiedene Aufgaben einsetzbare 4D-Modell effektiv verwertet bzw. wiederverwertet werden. Es liegt im Rahmen der Erfindung, dass das Bauwerk im 4D-Modell in bestimmte Abschnitte unterteilt ist und eine gezielte Mengenermittlung, insbesondere bezüglich der erforderlichen Baumaterialmengen für diese Abschnitte durchgeführt wird. Anschließend kann dann eine gezielte Anlieferung und Verwertung der Baumaterialien erfolgen. - Von besonderer Bedeutung ist im Rahmen der Erfindung, dass aus der Ermittlung der Mengen eine effektive Kalkulation der Kosten möglich ist. Dazu werden die entsprechenden Daten der Mengenermittlung zweckmäßigerweise in eine Kalkulations-Software über eine geeignete Schnittstelle exportiert.

Eine besondere Ausführungsform der Erfindung ist dadurch gekennzeichnet, dass durch das 4D-Modell ein zentrales Bauwerksinformationssystem bereit gestellt wird, in dem die Daten des 4D-Modells an eine Mehrzahl bzw. Vielzahl von Rechnern übermittelbar sind und an einer Mehrzahl von Anzeigeeinrichtungen visualisierbar sind. Auf diese Weise erhalten alle Projektbeteiligte auf einfache Weise Zugang zu dem 4D-Modell bzw. zu den Daten des 4D-Modells. Bei Bereitstellung des zentralen Bauwerksinformationssystems durch das 4D-Modell entsprechen die eingegebenen, dem Bauwerk zugeordneten Zusatzdaten zweckmäßigerweise auch Dokumenten, Zeichnungen, Verträgen und dergleichen. Außerdem betreffen die Zusatzdaten vorzugsweise Informationen zu einzelnen Räumen oder Raumgruppen des Bauwerkes. In das zentrale Bauwerksinformationssystem werden bevorzugt auch die Daten aus der Mengenermittlung (ermittelte Mengen, kalkulierte Kosten) aufgenommen. Es liegt im Rahmen der Erfindung, dass eine ständige Aktualisierung der Daten des zentralen Bauwerksinformationssystems erfolgt. Während der Errichtungsphase werden dabei erforderlichenfalls die Daten bezüglich der Errichtung des Bauwerkes aktualisiert und nach Abschluss der Errichtungsphase werden erforderlichenfalls die Daten für den Betrieb des Bauwerkes aktualisiert, und zwar anhand des tatsächlichen Zustandes nach der Errichtung.

Der Erfindung liegt die Erkenntnis zugrunde, dass das erfindungsgemäße 4D-Modell optimal zur Vermarktung eines Bauwerkes eingesetzt werden kann. Das erfindungsgemäße 4D-Modell zeichnet sich gegenüber den bislang bekannten Maßnahmen durch eine erhöhte Flexibilität und Wirtschaftlichkeit aus. Es liegt im Rahmen der Erfindung, dass mit dem erfindungsgemäßen Verfahren ein interaktives Modell im Internet bereitgestellt werden kann. Auf diese Weise kann sich ein breiter Personenkreis informieren. Durch das visualisierte 4D-Modell ist eine Vielzahl von Daten bezüglich des Bauwerkes verfügbar, beispielsweise auch Ausstattungseigenschaften des Bauwerkes oder aber Preise.

Es liegt im Rahmen der Erfindung, dass hier eine Verwertung bzw. Wiederverwertung der Daten aus der Mengenermittlung erfolgt.

Nach bevorzugter Ausführungsform der Erfindung umfasst das 4D-Modell als Zusatzdaten Zeitaufwandsdaten für die Errichtung des Bauwerkes bzw. einzelner Bauwerksteile und mittels dieser Zeitaufwandsdaten wird zumindest teilweise automatisch ein Bauablaufplan erstellt, wobei die Errichtung des Bauwerkes bzw. einzelner Bauwerksteile aus den Baumaterialien nach dem Bauablaufplan durchgeführt wird. Zeitaufwandsdaten meint insbesondere Daten, die Informationen über den Zeitaufwand liefern, der für die Errichtung einzelner Bauwerksteile bzw. -abschnitte erforderlich ist. Nach einer Ausführungsform der Erfindung wird der Bauablaufplan teilweise automatisch bzw. halbautomatisch mit dem Rechner erstellt. Die Erstellung des Bauablaufplans ermöglicht die Optimierung der Errichtungsphase, Das 4D-Modell bzw. die Daten des 4D-Modells können auch hier effektiv verwertet bzw. wiederverwertet werden. Es kann jederzeit eine baubegleitende Simulation und Visualisierung des Bauablaufs erfolgen und insbesondere ein Vergleich von Soll- und Ist-Zuständen. Das gewährleistet ein sicheres Erkennen von Verzögerungen im Bauablauf bzw. während der Errichtungsphase. - Die hier relevanten Daten (Zeitaufwandsdaten, Bauablaufplan) werden vorzugsweise in dem oben beschriebenen Bauwerksinformationssystem verwertet bzw. wiederverwertet.

Es ist hervorzuheben, dass die Anschaulichkeit des erfindungsgemäßen 4D-Modells die Kommunikation in Projektbesprechungen bezüglich des Bauwerkes erheblich erleichtert. Besprechungsergebnisse können in Echtzeit festgehalten werden und stehen im Rahmen des erfindungsgemäßen Verfahrens zum Speichern, Drucken und Versendung per E-Mail zur sofortigen Weitergabe an alle Besprechungsteilnehmer zur Verfügung. Eine nachträgliche Aufarbeitung der Ergebnisse ist daher nicht erforderlich. - Zu betonen ist, dass das 4D-Modell für Projektbesprechungen die Darstellung und Nutzung der Daten insbesondere aus der Mengenermittlung, aus dem Bauwerksinformationssystem und aus dem Bauablaufplan erlaubt.

Eine besonders bevorzugte Ausführungsform des erfindungsgemäßen Verfahrens ist dadurch gekennzeichnet, dass im Zuge der Planung des Bauwerkes eine Koordinierung der Gewerke mit Hilfe des 4D-Modells erfolgt und dass das Bauwerk mit entsprechend koordinierten Gewerken errichtet wird. So kann im 4D-Modell in die Planung der Architektur beispielsweise die Planung der technischen Bauwerksausstattung integriert werden. Auf diese Weise werden Konflikte mit Hilfe des 4D-Modells schnell und effektiv erkannt. Das 4D-Modell erlaubt hier die Verwertung bzw. Wiederverwertung der Daten aus der Mengenermittlung. Die bei der Koordination der Gewerke erhaltenen Daten können im Rahmen des erfindungsgemäßen 4D-Modells andererseits insbesondere im Bauwerksinformationssystem und in der Bauablaufplanung aber auch in der Vermarktung und in der Projektbesprechung wiederverwertet werden.

Im Rahmen des erfindungsgemäßen Verfahrens werden im Zuge des Abschlusses der Errichtungsphase die aktualisierten Daten ausgewertet und in Abhängigkeit davon erfolgt der Betrieb des Bauwerkes. Mit anderen Worten werden aus den aktualisierten Daten also Vorgaben für den Betrieb des Bauwerkes abgeleitet. Es liegt im Rahmen der Erfindung, dass für den Betrieb des Bauwerkes relevante Daten (Zusatzdaten) bereits während der Errichtungsphase im 4D-Modell bzw. im Bauwerksinformationssystem aufgenommen bzw. aktualisiert werden und am Ende der Errichtungsphase werden diese aktualisierten Daten beim Start der Betriebsphase berücksichtigt. Insoweit erfolgt eine einfache Überführung in die Betriebsphase (Facility Management).

Es liegt weiterhin im Rahmen der Erfindung, dass während der Errichtungsphase (Betriebsvorbereitungsphase) mittels der Daten bzw. aktualisierten Daten des 4D-Modells die Kosten für den Betrieb des Bauwerkes abgeschätzt werden können. Dabei handelt es sich insbesondere um die Kosten für die Wartung und/oder die Instandhaltung und/oder die Reinigung und/oder die Energieversorgung des Bauwerkes. Energieversorgung meint dabei vor allem die Beheizung des Bauwerkes. Mit Hilfe der aktualisierten Daten können somit auf effektive Weise im Voraus die Heizkosten für das Bauwerk verlässlich abgeschätzt werden.

Es liegt im Rahmen der Erfindung, dass die aktualisierten Daten, in deren Abhängigkeit der Betrieb (Facility Management) des Bauwerkes erfolgt aus der Mengenermittlung und/oder aus dem Bauwerksinformationssystem und/oder aus der Koordinierung der Gewerke stammen.

Der Erfindung liegt die Erkenntnis zugrunde, dass mit dem erfindungsgemäßen Verfahren eine einfache und effektive Koordination zwischen Planung, Errichtung und Betrieb des Bauwerkes stattfinden kann. Abweichungen der Ist-Zustände von den Soll-Zuständen können einfach und schnell erkannt werden. Gegenüber den aus der Praxis bekannten Maßnahmen wird mit dem erfindungsgemäßen Verfahren eine beachtliche Einsparung von Aufwand, insbesondere von Zeit und Kosten, erzielt. Das erfindungsgemäße Verfahren gewährleistet eine verbesserte Planungsqualität sowie eine bessere Abstimmung bei der Errichtung des Bauwerkes und eine effektive Koordination der Planung und Errichtung mit dem späteren Betrieb eines Bauwerkes. Im Ergebnis können qualitätsmäßig verbesserte Bauwerke hergestellt werden. Es muss noch darauf hingewiesen werden, dass das erfindungsgemäße Verfahren mit Unterstützung relativ einfacher Hardware- und Software-Komponenten durchgeführt werden kann.

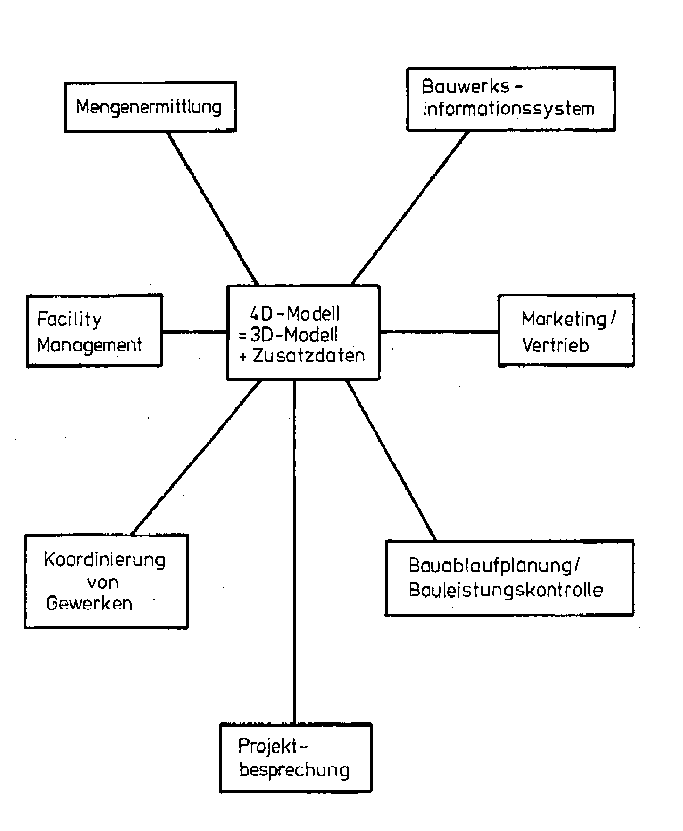

Die einzige Figur zeigt ein Schema eines Ausführungsbeispiels des erfindungsgemäßen Verfahrens. Aus diesem Schema ergibt sich, dass nach besonders bevorzugter Ausführungsform der Erfindung das 4D-Modell bzw. die Daten des 4D-Modells in den sieben Anwendungsbereichen Mengenermittlung, Bauwerksinformationssystem, Marketing/Vertrieb, Bauablaufplanung/Bauleistungskontrolle, Projektbesprechung, Koordinierung von Gewerken und Facility Management (Betrieb des Bauwerkes) wieder verwendet werden können. Mit dem 4D-Modell wird auf diese Weise eine effektive Koordination zwischen diesen Anwendungsbereichen erzielt.

## Patentansprüche

1. Verfahren zur Planung, Errichtung und zum Betrieb eines Bauwerkes,
wobei im Zuge der Planung des Bauwerkes mittels geometrischer Daten ein dreidimensionales Modell (3D-Modell) des Bauwerkes mit zumindest einem Rechner erstellt wird, welches 3D-Modell über zumindest eine Anzeigeeinrichtung visualisierbar ist,
wobei außerdem dem Bauwerk zugeordnete Zusatzdaten in dem Rechner abgespeichert werden (4D-Modell),
wobei anschließend das Bauwerk aus Baumaterialien errichtet wird,
wobei während der Errichtungsphase Soll-Zustände der Errichtungsphase anhand des 4D-Modells mit Ist-Zuständen der Errichtungsphase verglichen werden und die Daten, insbesondere die Zusatzdaten, entsprechend den Unterschieden zwischen Soll- und Ist-Zuständen aktualisiert werden
und wobei nach Abschluss der Errichtungsphase der Betrieb des Bauwerkes unterstützt durch die aktualisierten Daten und das 4D-Modell durchgeführt wird.

2. Verfahren nach Anspruch 1, wobei die Wartung und/oder die Instandhaltung und/oder die Reinigung und/oder die Energieversorgung des Bauwerkes unterstützt durch die aktualisierten Daten und das 4D-Modell durchgeführt wird.

3. Verfahren nach einem der Ansprüche 1 oder 2, wobei die dem Bauwerk zugeordneten Zusatzdaten die Baumaterialkosten und/oder Baumaterialeigenschaften und/oder zeitliche Errichtungsdaten und/oder Bauwerksteil-Kosten und/oder Bauwerkseigenschaften und/oder zeitliche Betriebsdaten und/oder leistungsbezogene Betriebsdaten betreffen.

4. Verfahren nach einem der Ansprüche 1 bis 3, wobei mit dem 4D-Modell die für die Errichtung des Bauwerkes erforderlichen Mengen an Baumaterial ermittelt werden, wobei diese ermittelten Mengen Baumaterial beschafft werden und damit die Errichtung des Bauwerkes durchgeführt wird.

5. Verfahren nach einem der Ansprüche 1 bis 4, wobei durch das 4D-Modell ein zentrales Bauwerksinformationssystem bereit gestellt wird, in dem die Daten des 4D-Modells an eine Mehrzahl bzw. Vielzahl von Rechnern übermittelbar sind und an einer Mehrzahl von Anzeigeeinrichtungen visualisierbar sind.

6. Verfahren nach einem der Ansprüche 1 bis 5, wobei das 4D-Modell als Zusatzdaten Zeitaufwandsdaten für die Errichtung des Bauwerkes bzw. einzelner Bauwerksteile umfasst und wobei mittels der Zeitaufwandsdaten zumindest teilweise automatisch ein Bauablaufplan erstellt wird und wobei die Errichtung des Bauwerkes bzw. einzelner Bauwerksteile aus den Baumaterialien nach dem Bauablaufplan durchgeführt wird.

7. Verfahren nach einem der Ansprüche 1 bis 6, wobei im Zuge der Planung des Bauwerkes eine Koordinierung der Gewerke mit Hilfe des 4D-Modells erfolgt und wobei das Bauwerk mit entsprechend koordinierten Gewerken errichtet wird.
